(19) Europäisches Patentamt
European Patent Office
Office européen des brevets

(11) **EP 2 009 055 A1**

(12) **EUROPEAN PATENT APPLICATION**
published in accordance with Art. 153(4) EPC

(43) Date of publication:
**31.12.2008 Bulletin 2009/01**

(51) Int Cl.:
**C08L 53/02** (2006.01)

(21) Application number: **07738792.6**

(22) Date of filing: **16.03.2007**

(86) International application number:
**PCT/JP2007/055347**

(87) International publication number:
**WO 2007/119390 (25.10.2007 Gazette 2007/43)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **28.03.2006 JP 2006087860**

(71) Applicant: **Kuraray Co., Ltd.**
**Okayama 710-8622 (JP)**

(72) Inventors:
• **JOGO, Yosuke**
**Kamisu-shi, Ibaraki 314-0197 (JP)**

• **MASUDA, Mikio**
**Kamisu-shi, Ibaraki 314-0197 (JP)**
• **HIGASHIDA, Noboru**
**Tokyo 100-8115 (JP)**
• **TORIGOE, Shinichi**
**Kurashiki-shi, Okayama 710-8691 (JP)**
• **TOKUCHI, Kazuki**
**Kurashiki-shi, Okayama 710-8691 (JP)**
• **MORIGUCHI, Nobuhiro**
**Kurashiki-shi, Okayama 710-8691 (JP)**

(74) Representative: **Müller-Boré & Partner**
**Patentanwälte**
**Grafinger Strasse 2**
**81671 München (DE)**

(54) **THERMOPLASTIC ELASTOMER COMPOSITION**

(57)    A thermoplastic elastomer composition comprising from 35 to 50 parts by mass of a hydrogenated block copolymer (a) having a weight-average molecular weight of from 70000 to 120000, from 30 to 50 parts by mass of a rubber softener (b) and from 5 to 25 parts by mass of a polystyrene-based resin (c) having a weight-average molecular weight of from 100000 to 400000 [provided that the total of (a), (b) and (c) is 100 parts by mass] , wherein the hydrogenated block copolymer (a) is prepared by hydrogenating a block copolymer having at least two polymer blocks A mainly comprising a vinyl aromatic compound unit and at least one polymer block B mainly comprising a conjugated diene unit, and has a vinyl aromatic compound unit content of from 35 to 45 % by mass, and at least 50 % of the carbon-carbon double bonds derived from the conjugated diene in the polymer block B are hydrogenated.

**Description**

TECHNICAL FIELD

The present invention relates to a thermoplastic elastomer composition.

BACKGROUND ART

Heretofore, urethane-based thermoplastic elastomer and vulcanized rubber are used for elastic films excellent in stress relaxability and elasticity recoverability. However, though excellent in stress relaxability and elasticity recoverability, films of urethane-based thermoplastic elastomer lack flexibility and are problematic in water resistance and weather resistance. Films of vulcanized rubber are flexible and excellent in stress relaxability and elasticity recoverability, but require vulcanization, and therefore their productivity is low, and in addition, since they are not thermoplastic, their recyclability is poor.

Given that situation, as thermoplastic elastomer compositions for films that are flexible and excellent in stress relaxability and elasticity recoverability, for example, [1] a material comprising from 20 to 80 % by weight of an elastomeric block copolymer, from 5 to 60 % by weight of a process oil and from 3 to 60 % by weight of a vinylarene resin (see Patent Reference 1) ; and [2] a thermoplastic polymer composition for elastomer films, comprising from 52 to 60 % by weight of a block polymer having at least two terminal polystyrene blocks and a center block of a hydrogenated diene polymer having a vinyl content of at most 45 % by weight, from 19 to 28 % by weight of an oil and from 13 to 22 % by weight of a polystyrene (see Patent Reference 2) are proposed.

Patent Reference 1:    JP-T 2003-509565

Patent Reference 2:    JP-T 2003-509564

However, the elastomer compositions proposed in Patent References 1 and 2 are not always satisfactory in point of their stress relaxability and flexibility, and there is room for improving them.

DISCLOSURE OF THE INVENTION

PROBLEMS TO BE SOLVED BY THE INVENTION

An object of the present invention is to provide a thermoplastic elastomer composition that solves the problems and is excellent in stress relaxability, flexibility, weather resistance and elasticity recoverability.

MEANS FOR SOLVING THE PROBLEMS

According to the present invention, the above object can be attained by providing a thermoplastic elastomer composition comprising from 35 to 50 parts by mass of a hydrogenated block copolymer (a) having a weight-average molecular weight of from 70000 to 120000, from 30 to 50 parts by mass of a rubber softener (b) and from 5 to 25 parts by mass of a polystyrene-based resin (c) having a weight-average molecular weight of from 100000 to 400000 [provided that the total of (a), (b) and (c) is 100 parts by mass], wherein the hydrogenated block copolymer (a) is prepared by hydrogenating a block copolymer having at least two polymer blocks A mainly comprising a vinyl aromatic compound unit and at least one polymer block B mainly comprising a conjugated diene unit, and has a vinyl aromatic compound unit content of from 35 to 45 % by mass, and at least 50 % of the carbon-carbon double bonds derived from the conjugated diene in the polymer block B are hydrogenated.

EFFECT OF THE INVENTION

According to the present invention, there is provided a thermoplastic elastomer composition excellent in stress relaxability, flexibility, weather resistance and elasticity recoverability.

BEST MODE FOR CARRYING OUT THE INVENTION

The present invention is described in detail hereinafter.
The hydrogenated block copolymer (a) that constitutes the thermoplastic elastomer composition of the present invention is a hydrogenated block copolymer prepared by hydrogenating a block copolymer having at least two polymer blocks A mainly comprising a vinyl aromatic compound unit and at least one polymer block B mainly comprising a conjugated diene unit.

The vinyl aromatic compound unit constituting the polymer block A in the hydrogenated block copolymer (a) includes, for example, structural units derived from styrene, $\alpha$-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, vinyltoluene, 1-vinylnaphthalene, 2-vinylnaphthalene, etc. Of those, preferred are structural units derived from styrene or $\alpha$-methylstyrene. The polymer block A may be constituted of only one type of those aromatic vinyl compound units, or may be constituted of two or more types thereof.

The conjugated diene unit constituting the polymer block B in the hydrogenated block copolymer (a) includes, for example, structural units derived from 1,3-butadiene, isoprene, 2,3-dimethyl-1,3-butadiene, 1,3-pentadiene, 1,3-hexadiene, etc. Of those, preferred are structural units derived from 1,3-butadiene, isoprene, or a mixture of 1,3-butadiene and isoprene. The polymer block B may be constituted of only one type of those conjugated diene units, or may be constituted of two or more types thereof. In case where the polymer block B is constituted of two or more types of conjugated diene units (for example, 1,3-butadiene unit and isoprene unit), the constitution ratio and the polymerization mode (block, random, etc.) are not specifically restricted. In case where the polymer block B is constituted of 1,3-butadiene units alone, the 1,2-bond ratio is preferably at least 25 % for the purpose of preventing the quality degradation of the elastomer owing to crystallization after hydrogenation.

The content of the polymer block A in the hydrogenated block copolymer (a) falls within a range of from 35 to 45 % by mass, preferably from 36 to 43 % by mass, more preferably from 37 to 42 % by mass. When the content of the polymer block A in the hydrogenated block copolymer (a) is less than 35 % by mass, then the stress relaxability of the obtained thermoplastic elastomer composition may lower; but when more than 45 % by mass, then the flexibility and the stress relaxability thereof may lower. The content of the polymer block A in the hydrogenated block copolymer (a) may be determined, for example, through $^1$H-NMR spectrometry.

In the polymer block B in the hydrogenated block copolymer (a), from the viewpoint of heat resistance and weather resistance, at least 50 % of the carbon-carbon double bonds derived from the conjugated diene must be hydrogenated, preferably at least 80 %, more preferably at least 90 % thereof are hydrogenated. The degree of hydrogenation may be obtained from the found data of the content of the carbon-carbon double bonds derived from the conjugated diene units in the polymer block B that is measured by iodine value titration, IR spectrometry, $^1$H-NMR spectrometry or the like before and after hydrogenation.

The bonding mode of the polymer block A and the polymer block B in the hydrogenated block copolymer (a) may be linear, branched, radial or in any combination of these. For example, when the polymer block A is represented by A and the polymer block B is B, the copolymer includes a triblock copolymer of A-B-A, a tetra-block copolymer of A-B-A-B, a penta-block copolymer of A-B-A-B-A or B-A-B-A-B, an $(A-B)_n X$ type copolymer (X represents a coupling agent residue, n indicates an integer of at least 2), etc. Of those, the hydrogenated block copolymer (a) is preferably a triblock copolymer of A-B-A or a tetra-block copolymer of A-B-A-B, more preferably a triblock copolymer of A-B-A, from the point of easy productivity.

The weight-average molecular weight of the hydrogenated block copolymer (a) falls within a range of from 70000 to 120000, preferably from 75000 to 118000, more preferably from 80000 to 115000. When the weight-average molecular weight of the hydrogenated block copolymer (a) is less than 70000, then the stress relaxability of the obtained thermoplastic elastomer composition may lower; but when more than 120000, then the moldability of the thermoplastic elastomer composition may be poor. The weight-average molecular weight as referred to herein means a weight-average molecular weight in terms of polystyrene, as measured through gel permeation chromatography (GPC). The weight-average molecular weight is measured under the following condition. Apparatus; GPC-8020 (Tosoh's GPC), solvent: tetrahydrofuran, test temperature: 40˚C, flow rate: 1 ml/min, amount to be fed: 150 $\mu$l, concentration: 5 mg/10 cc (hydrogenated block copolymer/THF).

The hydrogenated block copolymer (a) may have one or more functional groups such as a carboxyl group, a hydroxyl group, an acid anhydride group, an amino group and an epoxy group in the molecular chain and/or at the molecular terminals, not interfering with the object and the effect of the present invention. As the hydrogenated block copolymer (a), also usable is a mixture of the above-mentioned hydrogenated block copolymer having a functional group and a hydrogenated block copolymer not having a functional group.

The hydrogenated block copolymer (a) may be produced, for example, according to an anion polymerization method. Concretely, it may be produced according to (i) a method of successive polymerization of an aromatic vinyl compound and a conjugated diene with an alkyllithium compound serving as an initiator; (ii) a method of successive polymerization of an aromatic vinyl compound and a conjugated diene with an alkyllithium compound serving as an initiator followed by coupling with a coupling agent added thereto; (iii) a method of successive polymerization of a conjugated diene and then an aromatic vinyl compound with a dilithium compound serving as an initiator, etc.

The above mentioned alkyllithium compound includes, for example, methyllithium, ethyllithium, n-butyllithium, sec-butyllithium, tert-butyllithium, pentyllithium, etc. The coupling agent includes dichloromethane, dibromomethane, dichloroethane, dibromoethane, dibromobenzene, etc. The dilithium compound includes naphthalenedilithium, dilithiohexylbenzene, etc.

Preferably, the polymerization is performed in the presence of a solvent. The solvent is not specifically restricted so far as it is inert to the initiator and has no negative influence on the reaction. For example, it includes saturated aliphatic hydrocarbons or aromatic hydrocarbons such as hexane, cyclohexane, heptane, octane, decane, toluene, benzene and xylene.

A Lewis base may be used as a co-catalyst in the polymerization. The Lewis base includes, for example, ethers such as dimethyl ether, diethyl ether and tetrahydrofuran; glycol ethers such as ethylene glycol dimethyl ether and diethylene glycol dimethyl ether; amines such as triethylamine, N,N,N',N'-tetramethylethylenediamine and N-methylmorpholine, etc. Only one, or two or more of these Lewis bases may be used.

After the polymerization according to the method mentioned above, the gained polymerization liquid is poured into a poor solvent for the block copolymer, such as methanol, to thereby coagulate the block copolymer, or the polymerization liquid may be poured into hot water along with steam, then the solvent is removed (by steam stripping) through azeotropy, and thereafter the residue is dried to isolate the block copolymer.

Next, the block copolymer obtained in the above is hydrogenated to give the hydrogenated block copolymer (a). The hydrogenation may be attained generally at a reaction temperature of from 20 to 150°C and under a hydrogen pressure of from 0.1 to 20 MPa, in the presence of a hydrogenation catalyst, for example, Raney nickel; a heterogeneous catalyst such as Pt, Pd, Ru, Rh or Ni supported by a carrier such as carbon, alumina or diatomaceous earth; a Ziegler catalyst comprising a combination of a transition metal compound (nickel octylate, nickel naphthenate, nickel acetylacetonate, cobalt octylate, cobalt naphthenate, cobalt acetylacetonate or the like) and an organic aluminium compound such as triethylaluminium or triisobutylaluminium or an organic lithium compound; a metallocene catalyst comprising a combination of a bis (cyclopentadienyl) compound with a transition metal such as titanium, zirconium or hafnium and an organometallic compound comprising lithium, sodium, potassium, aluminium, zinc, magnesium or the like, etc. Without isolating the block copolymer from the block copolymer-containing polymerization liquid obtained in the above, the polymerization liquid may be hydrogenated directly as it is.

The hydrogenated block copolymer (a) obtained in the above hydrogenation may be isolated by pouring the hydrogenation liquid into a poor solvent for the hydrogenated block copolymer (a) such as methanol for coagulation, or by pouring the hydrogenation liquid into hot water along with steam and removing the solvent (by steam stripping) through azeotropy, and thereafter drying the residue.

The content of the hydrogenated block copolymer (a) in the thermoplastic elastomer composition of the present invention falls within a range of from 35 to 50 parts by mass, preferably from 40 to 50 parts by mass, more preferably from 45 to 50 parts by mass. When the content of the hydrogenated block copolymer (a) is less than 35 parts by mass, then the stress of the obtained thermoplastic elastomer composition may lower; but on the other hand, when more than 50 parts by mass, then the moldability of the obtained thermoplastic elastomer composition may worsen.

The rubber softener (b) that constitutes the thermoplastic elastomer composition of the present invention includes, for example, mineral oils such as paraffinic process oil and naphthenic process oil; vegetable oils such as peanut oil and rosin; phosphoric ester; low-molecular-weight polyethylene glycol; liquid paraffin; synthetic oils such as low-molecular-weight polyethylene, ethylene-$\alpha$-olefin co-oligomer, liquid polybutene, liquid polyisoprene or its hydrogenated products, liquid polybutadiene or its hydrogenated products, etc. Of those, preferred are paraffinic oils such as paraffinic process oil and liquid paraffin. As the paraffinic oils, preferred are those having a kinematic viscosity at 40°C of from 20 to 1500 mm$^2$/s, more preferably from 50 to 1000 mm$^2$/s, most preferably from 70 to 500 mm$^2$/s. One or more of these may be used either singly or as combined.

The content of the rubber softener (b) in the thermoplastic elastomer composition of the present invention falls within a range of from 30 to 50 parts by mass, preferably from 32 to 48 parts by mass, more preferably from 35 to 45 parts by mass. When the content of the rubber softener (b) is less than 30 parts by mass, then the moldability of the obtained thermoplastic elastomer composition may worsen; but when more than 50 parts by mass, then the stress of the obtained thermoplastic elastomer composition may greatly lower.

The polystyrene-based resin (c) in the thermoplastic elastomer composition of the present invention includes, for example, polystyrene, polyorthomethylstyrene, polyparamethylstyrene, polydimethylstyrene, polymetaethylstyrene, polychlorostyrene, polyisopropylstyrene, poly-tertiary butyl styrene, polyalphamethylstyrene, polyethylvinyltoluene, styrene-maleimide copolymer, styrene-N-phenylmaleimide copolymer, styrene-N-phenylmaleimide-acrylonitrile copolymer, styrene-N-phenylmaleimide-methyl methacrylate copolymer, styrene-N-phenylmaleimide-butyl acrylate copolymer, rubber-reinforced impact-resistant polystyrene, styrene-acrylonitrile copolymer (AS resin), styrene-acrylonitrile-butadiene copolymer (ABS resin), ethylene-propylene rubber-reinforced styrene-acrylonitrile copolymer (AES resin), polyacrylate rubber-reinforced styrene-acrylonitrile copolymer (AAS resin), styrene-methyl methacrylate copolymer (MS resin), styrene-methyl methacrylate-butadiene copolymer (MBS resin), etc. In the present invention, polystyrene and polyalphamethylstyrene are preferred for the polystyrene-based resin (c).

The weight-average molecular weight of the polystyrene-based resin (c) falls within a range of from 100000 to 400000, preferably from 120000 to 350000, more preferably from 150000 to 300000. When the weight-average molecular weight of the polystyrene-based resin (c) is less than 100000, then the stress relaxability of the obtained thermoplastic elastomer composition may worsen; but when more than 400000, then the moldability of thermoplastic elastomer composition may worsen.

The content of the polystyrene-based resin (c) in the thermoplastic elastomer composition of the present invention falls within a range of from 5 to 25 parts by mass, preferably from 7 to 22 parts by mass, more preferably from 8 to 18 parts by mass.

In accordance with the object, any other component may be incorporated in the thermoplastic elastomer composition of the present invention in addition to the above-mentioned components, not detracting from the effect of the present invention. The other components include, for example, various additives such as a filler, an antioxidant, a heat stabilizer, a light stabilizer, a UV absorbent, a neutralizing agent, a lubricant, an antifogging agent, an antiblocking agent, a colorant, a flame retardant, an antistatic agent, a crosslinking agent, a conductivity-imparting agent, an antimicrobial agent and an antifungal agent; thermoplastic resins other than the above-mentioned indispensable ingredient; elastomers other than the above-mentioned indispensable ingredient; a tackifying resin, a filler, etc. One or more selected from these may be suitably used either singly or as combined. The thermoplastic resins other than the indispensable ingredient include polyolefin-based resins such as ethylene-based resins and polypropylene. The ethylene-based resins include ethylene homopolymers such as high-density polyethylene and low-density polyethylene; ethylene copolymers, for example ethylene-$\alpha$-olefin copolymers such as ethylene-propylene copolymer, ethylene-1-butene copolymer, ethylene-1-hexene copolymer, ethylene-1-heptene copolymer, ethylene-1-octene copolymer, ethylene-4-methyl-1-pentene copolymer, ethylene-1-nonene copolymer, ethylene-1-decene copolymer; ethylene-vinyl acetate copolymer, ethylene-acrylic acid copolymer, ethylene-acrylate copolymer, ethylene-methacrylic acid copolymer, ethylene-methacrylate copolymer or resins derived from these by modifying them with maleic anhydride or the like; etc. In case where the polyolefin-based resin is incorporated, its content may be at most 30 % by mass of the total mass of the thermoplastic elastomer composition, preferably at most 20 % by mass. Of the above, when an ethylene-based resin is incorporated, then it may increase the stress not worsening the stress relaxability and residual strain. The ethylene-based resin in this case is preferably an ethylene homo-copolymer and an ethylene-$\alpha$-olefin copolymer, more preferably an ethylene homopolymer. The ethylene-based resin content is preferably within a range of from 2 to 40 parts by mass relative to 100 parts by mass of the total of the hydrogenated block copolymer (a), the rubber softener (b) and the polystyrene-based resin (c), more preferably from 3 to 25 parts by mass.

The above-mentioned hydrogenated block copolymer (a), rubber softener (b), polystyrene-based resin (c) and other optional constitutive ingredients are mixed to produce a thermoplastic elastomer composition of the present invention. They may be mixed in any ordinary method; and for example, they may be uniformly mixed with a mixing device such as a Henschel mixer, a ribbon blender or a V-type blender and then melt-kneaded with a kneading device such as a mixing roll, a kneader, a Banbury mixer, a Brabender mixer or a single-screw or twin-screw extruder. The kneading may be attained generally at 120 to 280˚C.

The obtained thermoplastic elastomer composition may be molded and worked in an ordinary manner in accordance with various shapes, thereby producing various shaped articles. For example, in case where the obtained thermoplastic elastomer composition is molded into films such as elastic films, the films may be single-layered films of the thermoplastic elastomer composition of the present invention alone, or may be multilayered films produced through coextrusion with a thermoplastic resin such as polyethylene. For the method of producing single-layered or multilayered films, for example, employable is a known molding technique of T-die film formation with a single-layered or multilayered die, extrusion lamination, coextrusion or the like. In general, the film thickness is within a range of from 15 to 200 $\mu$m.

EXAMPLES

The present invention is described more concretely with reference to the following Examples; however, the present invention is not limited to these Examples. The weight-average molecular weight of the hydrogenated block copolymer given below is a molecular weight in terms of polystyrene through GPC; and the styrene content, the degree of hydrogenation and the vinyl bond content are determined through $^1$H-NMR.

In the following Examples and Comparative Examples, the physical properties of the thermoplastic elastomer composition were evaluated according to the methods mentioned below.

(1) Evaluation of Dispersibility:

The thermoplastic elastomer composition obtained in Examples and Comparative Examples is press-formed at 240˚C into a sheet having a thickness of about 1 mm. The sheet is visually checked for transparency as the index of dispersibility.

○: The sample has high transparency and good dispersibility.

△: The sample is transparent, and its dispersibility is relatively good.

×: The sample is poorly transparent, and its dispersibility is not good.

(2) Cycle Hysteresis Test:

The thermoplastic elastomer composition obtained in Examples and Comparative Examples is press-formed at 240°C into a sheet having a thickness of about 0. 5 mm. A test strip having a width of 25 mm and a length of 75 mm is cut out of the sheet. Using an Instron tensile tester with a chuck-to-chuck distance of 25 mm, the test strip is stretched by 200 % at a test temperature of 25°C and at a test speed of 250 mm/min, kept as such for 30 seconds, and then shrunk down to 0% at a test speed of 250 mm/min, whereupon the 100 % elongation stress, the 200 % elongation stress, the retention stress after stretched by 200 % and kept as such for 30 seconds, and the residual strain (the elongation at which the tensile stress to shrink down to 0% is 0) are measured.

The stress relaxation at 200 % elongation in the cycle hysteresis test is computed according to the following formula (1) :

[Numerical Formula 1]

$$\text{Stress Relaxation (\%)} = [(f_{200\%} - f_{200\% @ 30 sec})/f_{200\%}] \times 100 \quad (1)$$

$f_{200\%}$: Stress at 200 % elongation,

$f_{200\% @ 30 sec}$: Retention stress after 30 seconds.

(3) Long-Time Stress Relaxation Test:

The thermoplastic elastomer composition obtained in Examples and Comparative Examples is press-formed at 240°C into a sheet having a thickness of about 1 mm. A test strip having a width of 25 mm and a length of 75 mm is cut out of the sheet. Using an Instron tensile tester with a chuck-to-chuck distance of 25 mm, the test strip is stretched by 50 % at a test temperature of 38°C and at a test speed of 125 mm/min, kept as such for 10 hours, whereupon the initial stress and the retention stress after 10 hours are measured.

The stress relaxation at 50 % elongation in the long-time stress relaxation test is computed according to the following formula (2):

[Numerical Formula 2]

$$\text{Stress Relaxation (\%)} = [(f_{50\%} - f_{50\% @ 10 hr})/f_{50\%}] \times 100 \quad (2)$$

$f_{50\%}$: Initial stress at 50 % elongation,

$f_{50\% @ 10 hr}$: Retention stress after 10 hours.

The details of the ingredients used in the following Examples and Comparative Examples are as follows:

Hydrogenated Block Copolymer

Hydrogenated Block Copolymer (a-1):

3000 ml of a solvent, cyclohexane and 9.3 ml of an initiator, sec-butyllithium having a concentration of 10.5 wt.% were put into a nitrogen-purged dried pressure container, heated up to 50°C, and then 130 ml of styrene was added thereto and polymerized for 1 hour. Subsequently, 540 ml of a mixture of isoprene and butadiene (50/50 by mass) was added to it and polymerized for 2 hours, then 130 ml of styrene was added thereto and polymerized for 1 hour, and thereafter the polymerization was stopped with 0.49 ml of methanol thereby giving a block copolymer-containing polymerization liquid. A Ziegler hydrogenation catalyst comprising nickel octylate/triethylaluminium was added to the reaction mixture, and hydrogenated under a hydrogen pressure of 0.8 MPa at 80°C for 5 hours, thereby giving a hydrogenated block copolymer (hereinafter this is referred to as a hydrogenated block copolymer (a-1)). The styrene content of the hydrogenated block copolymer (a-1) was 40 % by mass, the degree of hydrogenation thereof was 98 %, the vinyl bond content thereof was 9 %, and the weight-average molecular weight thereof was 99000.

Hydrogenated Block Copolymer (a-2):

3000 ml of a solvent, cyclohexane and 18.0 ml of an initiator, sec-butyllithium having a concentration of 10.5 wt.% were put into a nitrogen-purged dried pressure container, heated up to 50˚C, and then 170 ml of styrene was added thereto and polymerized for 1 hour. Subsequently, 720 ml of a mixture of isoprene and butadiene (50/50 by mass) was added to it and polymerized for 2 hours, then 170 ml of styrene was added thereto and polymerized for 1 hour, and thereafter the polymerization was stopped with 0.95 ml of methanol thereby giving a block copolymer-containing polymerization liquid. A Ziegler hydrogenation catalyst comprising nickel octylate/triethylaluminium was added to the reaction mixture, and hydrogenated under a hydrogen pressure of 0.8 MPa at 80˚C for 5 hours, thereby giving a hydrogenated block copolymer (hereinafter this is referred to as a hydrogenated block copolymer (a-2)). The styrene content of the hydrogenated block copolymer (a-2) was 40 % by mass, the degree of hydrogenation thereof was 97 %, the vinyl bond content thereof was 8 %, and the weight-average molecular weight thereof was 68000.

Hydrogenated Block Copolymer (a-3):

3000 ml of a solvent, cyclohexane and 8.9 ml of an initiator, sec-butyllithium having a concentration of 10.5 wt.% were put into a nitrogen-purged dried pressure container, heated up to 50˚C, and then 161 ml of styrene was added thereto and polymerized for 1 hour. Subsequently, 450 ml of a mixture of isoprene and butadiene (50/50 by mass) was added to it and polymerized for 2 hours, then 161 ml of styrene was added thereto and polymerized for 1 hour, and thereafter the polymerization was stopped with 0.47 ml of methanol thereby giving a block copolymer-containing polymerization liquid. A Ziegler hydrogenation catalyst comprising nickel octylate/triethylaluminium was added to the reaction mixture, and hydrogenated under a hydrogen pressure of 0.8 MPa at 80˚C for 5 hours, thereby giving a hydrogenated block copolymer (hereinafter this is referred to as a hydrogenated block copolymer (a-3)). The styrene content of the hydrogenated block copolymer (a-3) was 50 % by mass, the degree of hydrogenation thereof was 98 %, the vinyl bond content thereof was 9 %, and the weight-average molecular weight thereof was 101000.

Hydrogenated Block Copolymer (a-4):

Septon 4033 (Kuraray's trade name, hydrogenated styrene-isoprene/butadiene-styrene block copolymer having a styrene content of 30 % by mass and a weight-average molecular weight of 95000).

Hydrogenated Block Copolymer (a-5):

The hydrogenated block copolymer (a-1) and the hydrogenated block copolymer (a-4) was mixed in a ratio by mass of 71/29 to give a hydrogenated block copolymer (this is referred to as a hydrogenated block copolymer (a-5)). The styrene content of the hydrogenated block copolymer (a-5) was 37 % by mass, the degree of hydrogenation thereof was 98 %, the vinyl bond content thereof was 9 %, and the weight-average molecular weight thereof was 98000.

Rubber Softener

(b-1): Paraffinic process oil (Idemitsu Kosan's trade name, Diana Process Oil PW-90 having a kinematic viscosity at 40˚C of 95.54 $mm^2$/s).

Polystyrene-based Resin

(c-1) : GPPS (PS Japan's trade name, 679 having MFR of 18 g/10 min and a weight-average molecular weight of 199000).

Ethylene-based Resin

Low-density polyethylene (Nippon Polychem's trade name, LC500 having MFR of 4.0 g/10 min).

Examples 1 to 6, Comparative Examples 1 to 7:

The hydrogenated block copolymers (a-1) to (a-5), the rubber softener (b-1), the styrene-based resin (c-1) and the ethylene-based resin were mixed in a ratio by mass shown in Tables 1 and 2, and a phenolic antioxidant (Irganox 1010) was added to it in an amount of 0.1 % of the total mass of all components, then premixed, and thereafter using a Brabender mixer, this was melt-kneaded at 240˚C for 5 minutes. The obtained thermoplastic elastomer composition was tested and evaluated according to the above-mentioned methods (1) to (3). The results are shown in Tables 1 and 2.

[Table 1]

| | | Example 1 | Example 2 | Example 3 | Example 4 | Example 5 | Example 6 |
|---|---|---|---|---|---|---|---|
| Hydrogenated Block Copolymer | | | | | | | |
| | (a-1) | 48 | 45 | 40 | 47 | | |
| | (a-5) | | | | | 48 | 48 |
| Rubber Softener | | | | | | | |
| | (b-1) | 37 | 35 | 40 | 43 | 37 | 37 |
| Polystyrene-based Resin | | | | | | | |
| | (c-1) | 15 | 20 | 20 | 10 | 15 | 15 |
| Ethylene-based Resin | | | | | | | |
| | (low-density polyethylene) | | | | | | 5 |
| Quality Evaluation | | | | | | | |
| | Dispersibility | ○ | Δ | Δ | ○ | ○ | ○ |
| Cycle Hysteresis Test | | | | | | | |
| | Stress at 100 % elongation (MPa) | 0.67 | 0.65 | 0.44 | 0.46 | 0.56 | 0.75 |
| | Stress at 200 % elongation (MPa) | 0.85 | 0.87 | 0.61 | 0.59 | 0.71 | 0.96 |
| | Stress relaxation at 200 % elongation (%) | 10 | 10 | 7 | 6 | 5 | 9 |
| | Residual strain (%) | 10 | 10 | 5 | 7 | 9 | 12 |
| Long-Time Stress Relaxation Test | | | | | | | |
| | Stress relaxation (%) | 28 | 25 | 24 | 26 | 30 | 29 |
| | Retention stress after 10 hours (MPa) | 0.33 | 0.38 | 0.23 | 0.24 | 0.29 | 0.38 |
| | Time taken for stress relaxation to reach 30 % (hr) | 10< | 10< | 10< | 10< | 10 | 10< |

[Table 2]

| | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Hydrogenated Block Copolymer | | | | | | | |
| (a-1) | 57.79 | 55 | 30 | | | | |
| (a-2) | | | | | 49 | | |
| (a-3) | | | | | | 48 | |
| (a-4) | | | | 4 8 | | | 55 |
| Rubber Softener | | | | | | | |
| (b-1) | 24.08 | 35 | 51 | 3 7 | 36 | 37 | 30 |
| Polystyrene-based Resin | | | | | | | |
| (c-1) | 17.26 | 10 | 19 | 1 5 | 15 | 15 | 15 |
| Quality Evaluation | | | | | | | |
| Dispersibility | × | × | Δ | ○ | ○ | × | ○ |
| Cycle Hysteresis Test | | | | | | | |
| Stress at 100 % elongation (MPa) | 2.09 | 1.06 | 0 0.24 | 61 | 0.77 7 | 1.90 | 0.75 |
| Stress at 200 % elongation (MPa) | 3.22 | 1.35 | 0 0.35 | 78 | 1.05 5 | 2.85 | 0.94 |
| Stress relaxation at 200 % elongation (%) | 28 | 18 | 5 | 4 | 9 | 31 | 4 |
| Residual strain (%) | 17 | 12 | 4 | 9 | 9 | 20 | 10 |
| Long-Time Stress Relaxation Test | | | | | | | |

EP 2 009 055 A1

(continued)

|  | Comparative Example 1 | Comparative Example 2 | Comparative Example 3 | Comparative Example 4 | Comparative Example 5 | Comparative Example 6 | Comparative Example 7 |
|---|---|---|---|---|---|---|---|
| Stress relaxation (%) | 42 | 37 | 27 | 4: 2 | brok en | 41 | 36 |
| Retention stress after 10 hours (MPa) | 1.10 | 0.45 | 0 0.12 | 0.25 | - | 0.97 | 0.36 |
| Time taken for stress relaxation to reach 30 % (hr) | 0.3 | 1.9 | 10< | 2. | 0.9 | 0.6 | 3.8 |

From the results in Tables 1 and 2, the thermoplastic elastomer compositions obtained in Examples of the present invention are excellent in stress relaxability and elasticity recoverability.

INDUSTRIAL APPLICABILITY

The thermoplastic elastomer composition of the present invention is excellent in stress relaxability, flexibility, weather resistance and elasticity recoverability, and does not contain a substance to cause environmental pollution. Therefore it can be effectively used in wide various applications, for example, for sanitary materials such as paper diapers, toilet training pants, sanitary protections and underwear; medical materials such as poultice substrates, elastic tapes, bandages, gowns, supporters and correctional wear; bands such as hair bands, wrist bands, wristwatch bands and eyeglass bands; miscellaneous goods such as rubber bands and training tubes; and especially it is favorable for sanitary materials such as paper diapers and sanitary protections.

**Claims**

1. A thermoplastic elastomer composition comprising from 35 to 50 parts by mass of a hydrogenated block copolymer (a) having a weight-average molecular weight of from 70000 to 120000, from 30 to 50 parts by mass of a rubber softener (b) and from 5 to 25 parts by mass of a polystyrene-based resin (c) having a weight-average molecular weight of from 100000 to 400000 [provided that the total of (a), (b) and (c) is 100 parts by mass] , wherein the hydrogenated block copolymer (a) is prepared by hydrogenating a block copolymer having at least two polymer blocks A mainly comprising a vinyl aromatic compound unit and at least one polymer block B mainly comprising a conjugated diene unit, and has a vinyl aromatic compound unit content of from 35 to 45 % by mass, and at least 50 % of the carbon-carbon double bonds derived from the conjugated diene in the polymer block B are hydrogenated.

2. The thermoplastic elastomer composition as claimed in claim 1, which contains from 2 to 40 parts by mass of an ethylene-based resin relative to 100 parts by mass of the total of the hydrogenated block copolymer (a), the rubber softener (b) and the polystyrene-based resin (c).

3. The thermoplastic elastomer composition as claimed in claim 1 or 2, wherein the polymer block B mainly comprising a conjugated diene unit that constitutes the hydrogenated block copolymer (a) comprises a 1,3-butadiene unit and an isoprene unit, and at least 80 % of the carbon-carbon double bond derived from the conjugated diene in the polymer block B are hydrogenated.

4. The thermoplastic elastomer composition as claimed in any one of claims 1 to 3, wherein the hydrogenated block copolymer (a) is a triblock copolymer of A-B-A in which A represents the polymer block A and B represents the polymer block B.

5. The thermoplastic elastomer composition as claimed in any one of claims 1 to 4, wherein the rubber softener (b) is a paraffinic oil.

6. A film comprising a thermoplastic elastomer composition as claimed in any one of claims 1 to 5.

| INTERNATIONAL SEARCH REPORT | International application No. |
|---|---|
| | PCT/JP2007/055347 |

A. CLASSIFICATION OF SUBJECT MATTER
*C08L53/02*(2006.01)i, *C08L25/00*(2006.01)i, *C08L91/00*(2006.01)i

According to International Patent Classification (IPC) or to both national classification and IPC

B. FIELDS SEARCHED

Minimum documentation searched (classification system followed by classification symbols)
C08L53/02, C08L25/00, C08L91/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2006-89546 A  (Kuraray Co., Ltd.), 06 April, 2006 (06.04.06), Claims; Par. Nos. [0021], [0032] to [0035], [0043] to [0061] (Family: none) | 1-6 |
| X | JP 2005-232246 A  (Kuraray Co., Ltd.), 02 September, 2005 (02.09.05), Claims; Par. Nos. [0012], [0038] to [0042], [0057] to [0088] (Family: none) | 1-6 |
| X | JP 2004-115753 A  (Kuraray Plastics Co., Ltd.), 15 April, 2004 (15.04.04), Claims; Par. Nos. [0009], [0015], [0021] to [0042] (Family: none) | 1-6 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 June, 2007 (13.06.07) | 26 June, 2007 (26.06.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2007/055347 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2002-363376 A  (Kuraray Co., Ltd.),<br>18 December, 2002 (18.12.02),<br>Claims; Par. Nos. [0016] to [0017], [0025] to [0047]<br>(Family: none) | 1-6 |
| X | JP 57-212249 A  (Japan Synthetic Rubber Co., Ltd.),<br>27 December, 1982 (27.12.82),<br>Claims; page 2, lower left column to page 3, upper left column; page 3, lower right column to page 6<br>(Family: none) | 1-6 |
| A | JP 2003-509564 A  (Kraton Polymers Research B.V.),<br>11 March, 2003 (11.03.03),<br>Claims; page 6, lower part to page 7; page 8, lower part to page 12<br>& WO 2001/19919 A1      & EP 1224238 A1<br>& US 6630532 B1 | 1-6 |
| A | JP 2006-509089 A  (Kraton Polymers Research B.V.),<br>16 March, 2006 (16.03.06),<br>Claims; Par. Nos. [0021], [0037] to [0045], [0054] to [0075]<br>& EP 1426411 A1          & WO 2004/052989 A1<br>& EP 1569999 A1          & US 2006/155044 A1 | 1-6 |
| A | JP 10-195241 A  (JSR Corp.),<br>28 July, 1998 (28.07.98),<br>Claims<br>(Family: none) | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003509565 T
- JP 2003509564 T